# EUROPEAN PATENT SPECIFICATION

(11) **EP 1 478 847 B1**
(45) Date of publication and mention of the grant of the patent: **18.06.2008**
(21) Application number: 02800048.7
(22) Date of filing: 02.10.2002
(51) Int. Cl.: F03B 17/06, F03B 7/00

(54) **A POWER STATION**
KRAFTWERK
CENTRALE

(30) Priority: 02.10.2001 DK 200101440
(43) Date of publication of application: 24.11.2004
(73) Proprietor: Hilleke.Com, 4800 Nykoebing F (DK)
(72) Inventor: HILLEKE, Bent, DK-4800 Nyk bing F (DK)
(74) Representative: Holme, Edvard
(86) International application number: PCT/DK2002/000652
(87) International publication number: WO 2003/029646

(56) References cited:
- EP-A1- 1 079 104
- GB-A- 2 205 615
- US-A- 4 382 797

## Description

The invention relates to a power station for utilising the energy in a mainly horizontally flowing flow of water and functioning during operation by means of at least one rotor submerged completely or partly in the water flow and in form of a shaft having a number of projecting blades and disposed rotatably around a rotation axis mainly transversely to the flow direction.

Due to a globally increasing energy consumption and an increasing environmental awareness, the interest in power stations that can utilise the clean, renewable energy sources is increasing to thereby be able to supplement the energy supplied by power stations utilising the polluting fossil fuels or the unpopular nuclear power.

Hydropower is a clean, renewable energy source, which has been utilised to a great extent now as in the past. Today, the energy in waterfalls, rivers and other streams are especially utilised for generating electric current.

In former times, water wheels having projecting blades have been used to supply mechanical power to machinery in factories or for example for milling flour. These water wheels were mainly placed in streams having a mainly horizontal extent, for example rivers or brooks. However, the energy in such streams is limited and far from covers the great demand for energy of today.

In e.g. sea currents, there are however very large energy resources, which however have been regarded so far as rather difficult to utilise in practice, among other things because the currents often change direction.

An attempt to utilise horizontal water flows is known from the patent document US 4,383,797 which relates to an arrangement having a water wheel operating completely submerged in e.g. a river or channel. The water wheel has radially projecting blades each consisting of an interior, fixed section pivotally connected to an exterior section which is unfolded when the respective blades are rotated in the flow direction, and folded when the blades are rotated in the opposite direction of the flow direction. Thereby, the water wheel is acted upon by a moment that will make the wheel rotate. The known arrangement has a small useful effect and can only be used in one flow direction. In water flows of changing directions, the arrangement is, on the whole, only effective half the time.

From European patent application EP 1079104 a generator is known which has a rotor with blades that are displaceable. The blades are thus extended in an area where they are exposed to the flow of the water. Thus it is possible to construct a rotor, which can rotate in both directions when influenced by a flow of water which changes directions. However, this construction is not optimal and the rotation of the rotor is impeded by areas in the water which are on the opposite side of the rotor than that of the direction of the flow of water.

The object of the invention is to provide a power station of the kind mentioned in the opening paragraph, that has a simple structure and is able to utilise the energy in a mainly horizontally extending water flow far better than hitherto know.

A second object of the invention is to provide a power station of the kind mentioned in the opening paragraph, which can operate effectively in changing flow directions.

A third object of the invention is to provide a power station of the kind mentioned is the opening paragraph, which can operate effectively in submerged state in a horizontally extending water flow.

The novel and unique features according to the invention, whereby this is achieved, is the fact that the power station comprises a blade guide, for each blade, extending mainly radially and serving for accommodating the respective blade, and means for displacing the blade in such a way in the blade guide that its peripheral outer edge will describe an enveloping face during each of the rotations of the rotor, said enveloping face having a minimum distance from the rotation axis in an intersection line between this face and a symmetry plane extending transversely of the flow direction.

In a symmetric area around the minimum distance of the enveloping face from the rotation axis, the blades are drawn more or less into the respective blade guides. They are therefore not or only to a smaller extent affected by the water flow during operation. The blades in the opposite area of the enveloping face are however pushed more or less out of their respective blade guides. These blades are therefore affected effectively by the water flow, the result of which is that they are brought along in the flow direction and thereby will bring the rotor into rotation, whatever side of the rotor the flow direction is coming from. In this way, the energy in the water flow is utilised effectively. It can furthermore be seen that the rotor can operate effectively when it is completely submerged in the water flow.

In a first embodiment of the power station according to the invention, the means for displacing the blades can consist of a pneumatic installation having pneumatic cylinders for giving the blades the desired displacement back and forth in their blade guides. The pneumatic installation is arranged in such a way that the blades are made to follow the enveloping face whatever side of the rotor the flow is coming.

Alternatively, the means for displacing the blades can consist of a hydraulic installation having hydraulic cylinders for giving the blades the desired displacement back and forth in their blade guides. The hydraulic installation is also arranged in such a way that the blades are made to follow the enveloping face whatever side of the rotor the flow is coming.

However, it is to be noted that the enveloping face in this case can have one shape when the water flow is coming from one side of the rotor and another shape when the water flow is coming from the other side. The two enveloping faces can e.g. be symmetrically formed around the symmetry plane.

In a second embodiment of the power station according to the invention, the means for displacing the blades can be of a purely mechanical kind. In this case, a circumferential guide is arranged at each end of the rotor, said guide being congruent with a cross section through the enveloping face. The blades can furthermore be provided with e.g. slide shoes or pins having rollers mounted rotatably for following the path of the circumferential guide during the rotation of the rotor. This embodiment is especially simple and reliable.

Alternatively, the circumferential guide can be following the enveloping face crosswise and completely or partly lengthwise, whereas the outer edges of the blades or rollers on these blades are running along the guide thus formed during the rotation of the rotor.

The forces from the water flow affect the extended blades with a considerable bending moment which has to be absorbed by the respective blade guides which thereby are subjected to a very heavy load at the same time as the blades also must be able to be displaced in their blade guides without a tendency to edging and getting stuck during this.

With a view to overcome this problem, the rotor can be designed with oppositely paired blades, which can be interconnected by strong bars. Thereby, both blade guides absorb the bending moment simultaneously, and as the two guides furthermore are located at a relatively great distance from each other, the load on the guides is reduced considerably.

In one embodiment, the rotor shaft can have a relatively large diameter. In this case, the blade guide can be extending radially in towards the rotation axis from the periphery of the shaft which furthermore is coinciding with the enveloping face in a symmetry area around the intersection line between the symmetry plane and the enveloping face, whereas the opposite section of the enveloping face is extending at a distance from the periphery of the shaft. During operation, the retracted blades in said symmetry area will be inoperative, whereas the extended blades in the opposite section of the enveloping face will catch the water flow and thereby make the rotor rotate.

In an alternative second embodiment, the rotor shaft can have a relatively small diameter and have blade guides extending radially out from the periphery of the shaft. A symmetry area around the intersection line between the symmetry plane and the enveloping face can then be covered by a shield for guiding the water flow round the rotor in this area so that it will only be the blades in the opposite rotor area that actively can utilise the energy in the water flow and thereby make the rotor rotate.

The shield can advantageously contact or nearly contact the intersection line and from this line have an increasing distance to the enveloping face with the largest distance at the longitudinal edges of the shield.

The rotor arrangement can advantageously be located on or near the bottom of a water area where there is a suitably strong undercurrent. If the rotor arrangement is disposed in this way, it will not obstruct the maritime traffic, and it will furthermore not risk being hit and damaged by e.g. driftwood. The rotor can advantageously be horizontally oriented.

Alternatively, a number of rotor arrangements can be disposed in a line extending out from a coast or an area off a coast where there is a sufficiently strong current following the coast line at least in the main.

The rotors can be horizontally or vertically oriented. In the former case, the shields can advantageously face upwards. The line of rotor arrangement will form a near-shore, permanent source for clean energy and at the same time advantageously function as an effective coastal protection.

The rotors can furthermore be protected by a mesh or lattice for preventing humans, animals or fish entering between the blades.

The invention will be explained in greater details below, describing only exemplary embodiments with reference to the drawing, in which
Fig. 1 is an end view of a first embodiment of a power station according to the invention,
Fig. 2 is a side elevational view of the power station in fig. 1,
Fig. 3 is a perspective view of a second embodiment of the power station, and
Fig. 4 is a plan view of a power station consisting of four vertically disposed rotors located in a line extending out from a coast.

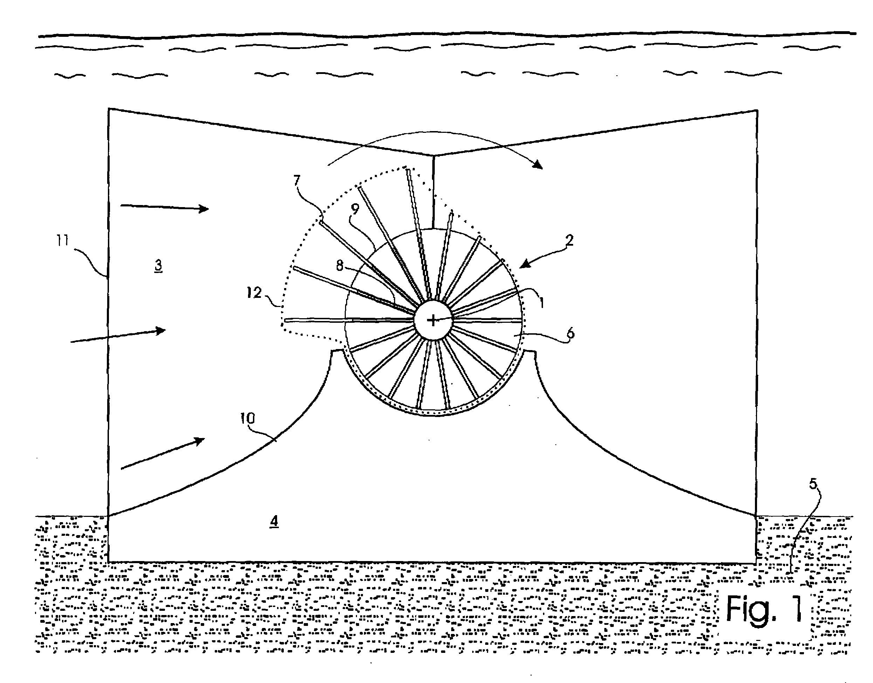

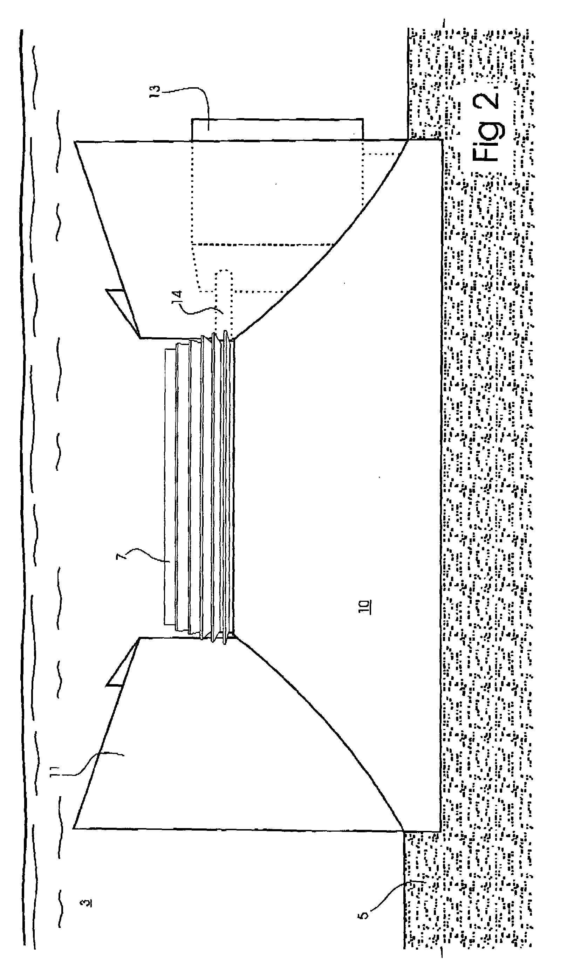

Figs. 1 and 2 show a first embodiment of a power station having a rotor 2 oriented horizontally about a rotation axis 1 and submerged in a horizontally extending water flow 3 and extending transversely of this water flow. The rotor is rotatably journaled in a base 4 located on the seafloor 5.

The rotor is constructed of a shaft 6 having a total of 18 projecting blades 7. Each of these blades is displaceably mounted in a radially extending blade guide 8 extending in towards the rotation axis 1 from the periphery 9 of the shaft.

The base 4 is extending in a curve - seen in cross section - up from the seafloor 5 to the rotor from each side of this rotor and thereby forms guide faces 10 for guiding the water flow into the rotor.

Baffles 11 at each end of the rotor are furthermore extending obliquely in towards the rotor and together with the baffles 10 serve for increasing the volume of the water flow, which drives the rotor during operation, whereby the energy production of the power station at the same time is increased.

During rotation, the peripheral outer edges of the rotor blades 7 are describing, as shown in fig. 1, an enveloping face 12 which coincides with or follows the periphery 9 of the shaft 6 at a short distance in a first area at the base 4, the blades here being completely or almost completely retracted into the shaft. In a second area where the blades are pushed more or less out of their respective blade guides, the enveloping face is extending at a distance from the periphery of the shaft 6.

Thereby, the enveloping face 12 will obtain the shape in fig. 1 if the flow is coming from the left, seen in the figure. If the flow is coming from the right, a second enveloping face is formed which is symmetrical around the first one around a symmetry plane extending crosswise to the flow and includes the rotor shaft 1.

In the first area of the enveloping face, the blades are not or at least only to a smaller degree affected by the water flow, whereas they, in the second area, are positively affected by a force which will make the rotor rotate in the direction indicated by the arrow.

The blades can in themselves be displaced back and forth in their respective blade guides in any expedient way. The important thing is that their outer edges will follow the desired enveloping face during rotation, that is the enveloping face that will ensure that the power station will operate with optimum utilisation of the energy content of the water flow.

In an advantageous embodiment, the blades are however displaced by means of a pneumatic or hydraulic installation (not shown) with one pneumatic or hydraulic cylinder for each blade (not shown) for displacing the blade back and forth in its respective blade guide.

The energy recovered from the water flow by the rotor during operation will typically be converted into electric current by means of a generator (not shown) connected to a gearing (not shown) which again is connected to the rotor shaft 6 by means of a output shaft 14.

Gearing and generator are protected against the harsh surroundings under the water in a watertight casing 13 (fig. 2) from which an electric cable (not shown) leads from the generator up on to e.g. land.

During normal circumstances, the rotor is rotating relatively slowly under the influence of the flowing water which can be flowing at a rate of e.g. between 10 and 100 m/min., whereby the rotational speed of a rotor having an active diameter of 5 m will be no more than 0.5 - 5 rpm, whereas a generator typically has to rotate at e.g. 1000 - 3000 rpm. Therefore, a high gearing is required between the rotor and the generator. The gearing can e.g. be established by means of a conventional mechanical or hydraulic gear.

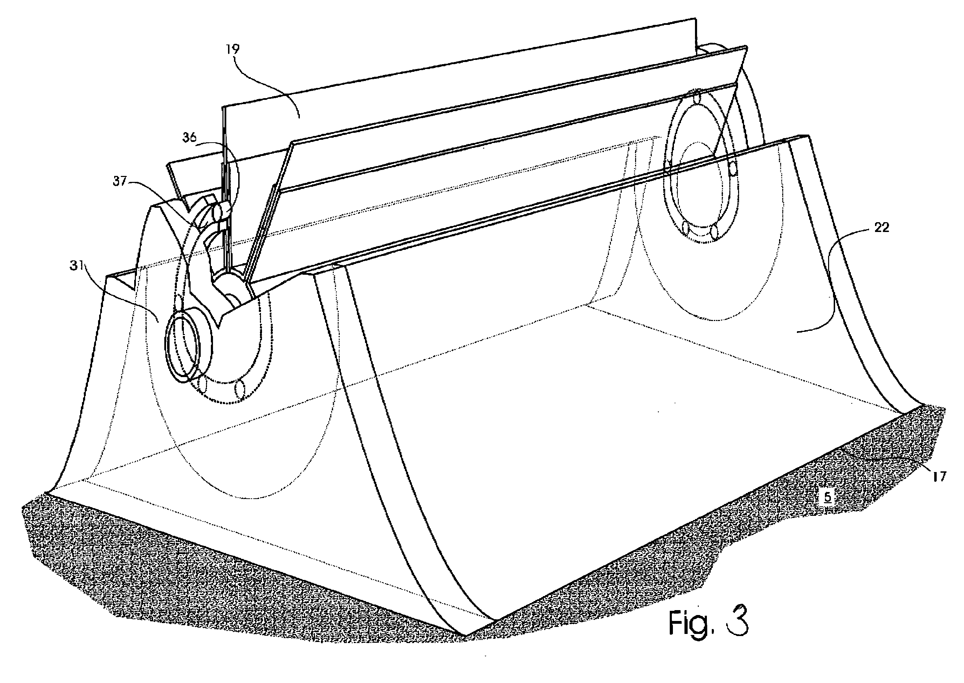

Fig. 3 show a second embodiment of a power station having a rotor 16 oriented horizontally about a rotation axis 15, submerged in a horizontally extending water flow 3 and extending crosswise of this flow. The rotor is rotatably journaled in a base 17 located on the seafloor 5.

The rotor is constructed of a shaft 18 having a total of 10 projecting blades 19, each displaceably mounted in a radially extending blade guide 20 extending radially out from the shaft 18.

The base 17 is extending in a curve - seen in cross section - up from the seafloor 5 to the rotor from each side of this rotor and thereby forms guide faces 10 for guiding the water flow into the rotor and a shield around the lower part of the rotor.

During operation, the water flow is affecting each of the extended blades with a force that creates a considerable moment, which will load the blade and associate blade guide 20 heavily. As seen best in fig. 3, two of each pair of diametrically opposed blades 19 are therefore interconnected by means of strong bars 23 to distribute the moment on two blade guides which advantageously are located at a distance from each other so that a long moment arm is obtained and correspondingly reduced loads on the blade concerned and its blade guide.

The radial outer edges of the blades 19 are describing an enveloping face 27 which, in this case, is extending symmetrically about a symmetry plane 29 extending crosswise to the water flow and is including the axis 15 of the rotor.

In an area formed symmetrically around the intersection line 28 between the symmetry plane 29 and the enveloping face 27, the rotor is covered by the base 17 which thereby functions as a shield which will guide the water flow out of said symmetry area so that the blades in this area will be at least substantially inactive.

In the opposite area of the rotor 16 where the blades 19 are pushed more or less out of their blade guides 20, the blades are, on the contrary, active. During the influence of the pressure from the flowing water, the blades in this area will therefore make the rotor rotate in the direction indicated by the arrow. Therefore, the rotor is functioning as a motor in this area, which utilises the energy in the water flow as propellant.

In the embodiment in fig. 3, the blades 19 are pushed back and forth in their respective blade guides by means of rollers 36 rotatably mounted on the blades and running in a circumferential guide 37 at each their end of the rotor during the rotation of the rotor. The two guides 37 are congruent with the desired enveloping face 27 so that the peripheral outer edges of the blades automatically will follow this face when the rotor is rotating. As the blades 19 are connected in pairs to the bars 23, there is only one roller for each pair of blades.

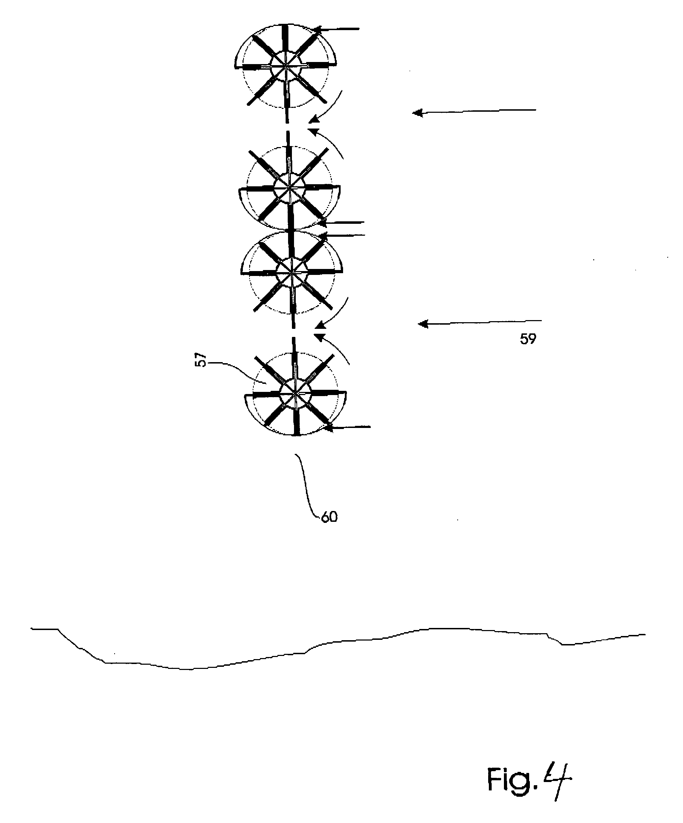

Fig. 4 shows a power station consisting of four vertically placed rotors 57 located in a row extending out from a coast 58 crosswise to the water flow 59 which, in the figure, is flowing from right to left but which can be flowing from left to right in other cases. The four rotors are mounted on a joint base 60.

In this embodiment, the power station is at the same time functioning as an effective coastal protection.

The invention is described above and shown in the drawing on the assumption that it is the upper part of the horizontally oriented rotor that is active, whereas the lower part is inactive.

However within the scope of the invention, it can just as well be the other way round that is so that the upper part of the rotor is inactive and the lower part is active.

According to the conditions in the flow area in question, a more or less fine meshed lattice (not shown) can furthermore be mounted for protecting the rotor against being hit by e.g. driftwood, and fish, animals and humans from being hit by the rotor.

## Claims

1. A power station for utilising the energy in a mainly horizontally flowing flow of water (3) and functioning during operation by means of at least one rotor (2;16) submerged completely or partly in the flow of water (3) and in form of a shaft (6;18) having a number of projecting blades (7;19) and disposed around a rotation axis (1;15) mainly transversely to the flow direction, and a mainly radially extending blade guide (8;20) for each blade (7;19) serving for displaceably accommodating the respective blade (7;19), the power station comprising
- means for displacing the blade (7;19) in such a way in its blade guide (8;20) that its peripheral outer edge will describe an enveloping face (12) during each of the rotations of the rotor, said enveloping face having a greater distance from the rotation axis in the areas in which the blade (7;19) is affected by the pressure from the flow of water (3) than in the areas in which this is not the case, and that the enveloping face (12) has one shape when the water flow (3) is coming from one side of the rotor (2;16) and another shape when the flow of water (3) is coming from the other side of the rotor (2;16).

2. A power station according to claim 1, **characterised in that** the means for displacing the blade (7;19) are pneumatic or hydraulic.

3. A power station according to claim 1, **characterised in that** the means for displacing each blade (7) in its blade guide (8) comprise a pneumatic installation having pneumatic cylinders for making the peripheral outer edges of the blades (7) describe said enveloping face (12) during each of the rotations of the rotor (2).

4. A power station according to claim 1, **characterised in that** the means for displacing the blades (19) in the blade guides (20) consist of at least one circumferential guide (37) which is congruent with a cross section through the enveloping face (27), and at least one following device (36) on at least half the blades (7) for following the path of the at least one circumferential guide (37) during the rotation of the rotor (16), and that each following device (36) consists of an axially extending slide or of journal having a rotatably mounted roller.

5. A power station according to claim 1 or 2, **characterised in that** the blade guides (8) are extending radially inwards from the periphery (9) of the shaft, and that the enveloping face (12) is at least mainly coinciding with the periphery (9) of the shaft along an area extending symmetrically on both sides of the intersection line (28), whereas the rest of the enveloping face (12) is extending at a distance from the periphery (9) of the shaft.

6. A power station according to claim 3, **characterised in that** the blade guides (20) are extending radially outwards from the periphery of the shaft, that there is a shield which is following the enveloping face (27) at a relatively short or no distance lengthwise and crosswise and is defined by a longitudinal edge (21a,b) on either side of the intersection line (28), and that the two longitudinal edges (21a,b) is located at mainly the same distance from the intersection line (28).

7. A power station according to any of the claims 1 - 6, **characterised in that** the blade guides (8;20) are located in pairs diametrically opposite each other, that the blades (7;19) in two opposite blade guides (8;20) are interconnected by at least one bar (23).

## Patentansprüche

1. Ein Kraftwerk zur Nutzung der Energie in einem im wesentlichen horizontal fließenden Wasserstrom (3), das während des Betriebs mittels wenigstens eines Rotors (2; 16), der vollständig oder teilweise in dem Wasserstrom (3) untergetaucht ist, arbeitet, und in Form einer Welle (6, 18) mit einer Mehrzahl von abstehenden Blättern (7; 19), die um eine Drehachse (1; 15) herum im wesentlichen quer zur Strömungsrichtung angeordnet sind, und mit einer sich im wesentlichen radial erstreckenden Blattführung (8; 20) für jedes Blatt (7; 19), die zum verlagerbaren Aufnehmen des jeweiligen Blatts (7; 19) dient, wobei das Kraftwerk ein Mittel zum Verlagern des Blatts (7; 19) in der Blattführung (8; 20) aufweist, so dass sein peripherer Außenrand während jeder der Drehungen des Rotors eine einhüllende Fläche (12) umschreibt, die in den Bereichen, in denen das Blatt (7; 19) von dem Druck des Wasserstroms (3) beaufschlagt wird, einen größeren Abstand von der Rotationsachse hat, als in den Bereichen, in denen das nicht der Fall ist, und wobei die einhüllende Fläche (12) eine erste Form hat, wenn der Wasserstrom (3) von einer Seite des Rotors (2; 16) kommt, und eine andere Form, wenn der Wasserstrom (3) von der anderen Seite des Rotors (2; 16) kommt.

2. Ein Kraftwerk nach Anspruch 1, **dadurch gekennzeichnet, dass** die Mittel zum Verlagern der Blatts (7; 19) pneumatisch oder hydraulisch sind.

3. Ein Kraftwerk nach Anspruch 1, **dadurch gekennzeichnet, dass** das Mittel zum Verlagern jedes Blatts (7) in seiner Blattführung (8) eine pneumatische Installation mit pneumatischen Zylindern zum Veranlassen der Außenränder der Blätter, die einhüllende Fläche (12) während jeder der Rotationen des Rotors (2) zu umschreiben, aufweist.

4. Ein Kraftwerk nach Anspruch 1, **dadurch gekennzeichnet, dass** das Mittel zum Verlagern der Blätter (19) in den Blattführungen (20) aus wenigstens einer umlaufenden Führung (37), die mit einem Querschnitt durch die einhüllende Fläche (27) kongruent ist, und wenigstens einer folgenden Einrichtung (36) an wenigstens der Hälfte der Blätter (7) zum Folgen des Weges der wenigstens einen umlaufenden Führung (37) während der Drehung des Rotors (16) besteht und dass jede folgende Einrichtung (36) aus einem sich axial erstreckendem Schieber oder einem Lagerzapfen mit einer drehbar montierten Walze besteht.

5. Ein Kraftwerk nach Anspruch 1 oder 2, **dadurch gekennzeichnet, dass** die Blattführungen (8) sich radial von dem Umfang (9) der Welle nach innen erstrecken, und dass die einhüllende Fläche (12) wenigstens im Wesentlichen mit dem Umfang (9) der Welle entlang eines Bereiches, der sich symmetrisch auf beiden Seiten der Schnittlinie (28) erstreckt, übereinstimmt, wobei der Rest der einhüllenden Fläche (12) sich mit einem Abstand von dem Umfang (9) der Welle erstreckt.

6. Ein Kraftwerk nach Anspruch 3, **dadurch gekennzeichnet, dass** die Blattführungen (20) sich radial von dem Umfang der Welle nach außen erstrecken, dass ein Schild vorgesehen ist, das der einhüllenden Fläche (27) mit einem kleinen oder keinem Abstand in Längsrichtung oder in Querrichtung folgt und durch einen Längsrand (21a,b) auf einer der Seiten der Schnittlinie (28) begrenzt ist und dass die beiden Längsränder (21a,b) im wesentlichen mit dem selben Abstand von der Schnittlinie (28) angeordnet sind.

7. Ein Kraftwerk nach einem der Ansprüche 1 - 6, **dadurch gekennzeichnet, dass** die Blattführungen (8;20) in Paaren einander diametral entgegengesetzt angeordnet sind und dass die Blätter (7;19) in zwei einander gegenüber liegenden Blattführungen (8;20) miteinander über wenigstens eine Stange (23) verbunden sind.

## Revendications

1. Centrale pour utiliser l'énergie dans un écoulement d'eau (3) s'écoulant principalement horizontalement et fonctionnant en utilisation au moyen d'au moins un rotor (2 ; 16) complètement ou partiellement immergé dans l'écoulement d'eau (3) et sous forme d'un arbre (6 ; 18) ayant un nombre d'aubes en saillie (7 ; 19) et disposées autour d'un axe de rotation (1 ; 15) principalement transversalement à la direction d'écoulement, et un guide d'aube s'étendant principalement radialement (8 ; 20) pour chaque aube (7 ; 19) servant à loger de manière déplaçable l'aube respective (7 ; 19), la centrale comprenant
des moyens pour déplacer l'aube (7 ; 19) dans son guide d'aube (8 ; 20) de sorte que son bord extérieur périphérique décrit une face enveloppante (12) pendant chacune des rotations du rotor, ladite face enveloppante ayant une plus grande distance depuis l'axe de rotation dans les régions dans lesquelles l'aube (7 ; 19) est affectée par la pression provenant de l'écoulement d'eau (3) que dans les régions dans lesquelles ceci n'est pas le cas, et de sorte que la face enveloppante (12) possède une forme lorsque l'écoulement d'eau (3) provient d'un côté du rotor (2 ; 16) et une autre forme lorsque l'écoulement d'eau (3) provient de l'autre côté du rotor (2 ; 16).

2. Centrale selon la revendication 1, **caractérisée en ce que** les moyens pour déplacer l'aube (7 ; 19) sont pneumatiques ou hydrauliques.

3. Centrale selon la revendication 1, **caractérisée en ce que** les moyens pour déplacer chaque aube (7) dans son guide d'aube (8) comprennent une installation pneumatique ayant des cylindres pneumatiques pour amener les bords extérieurs périphériques des aubes (7) à décrire ladite face enveloppante (12) pendant chacune des rotations du rotor (2).

4. Centrale selon la revendication 1, **caractérisée en ce que** les moyens pour déplacer les aubes (19) dans les guides d'aube (20) comprennent au moins un guide circonférentiel (37) qui est congruent à une section transversale à travers la face enveloppante (27), et au moins un dispositif suiveur (36) sur au moins la moitié des aubes (7) pour suivre le trajet de l'au moins un guide circonférentiel (37) pendant la rotation du rotor (16), et **en ce que** chaque dispositif suiveur (36) comporte un coulisseau s'étendant axialement ou un tourillon ayant un galet monté à rotation.

5. Centrale selon la revendication 1 ou 2, **caractérisée en ce que** les guides d'aube (8) s'étendent radialement vers l'intérieur depuis la périphérie (9) de l'arbre, et **en ce que** la face enveloppante (12) coïncide au moins principalement avec la périphérie (9) de l'arbre le long d'une région s'étendant symétriquement sur les deux côtés de la ligne d'intersection (28), tandis que le reste de la face enveloppante (12) s'étend à une distance de la périphérie (9) de l'arbre.

6. Centrale selon la revendication 3, **caractérisée en ce que** les guides d'aube (20) s'étendent radialement vers l'extérieur depuis la périphérie de l'arbre, **en ce qu'**il existe un écran qui suit la face enveloppante (27) à une distance longitudinale et transversale relativement courte ou nulle et est défini par un bord longitudinal (21a,b) sur l'un des côtés de la ligne d'intersection (28), et **en ce que** les deux bords longitudinaux (21a,b) sont situés principalement à la même distance de la ligne d'intersection (28).

7. Centrale selon l'une quelconque des revendications 1 à 6, **caractérisée en ce que** les guides d'aube (8 ; 20) sont situés par paires diamétralement opposés l'un de l'autre, **en ce que** les aubes (7 ; 19) dans deux guides d'aube opposés (8 ; 20) sont reliés entre eux par au moins une barre (23).
